# EUROPÄISCHE PATENTSCHRIFT

(11) **EP 0 700 624 B1**
(45) Veröffentlichungstag und Bekanntmachung des Hinweises auf die Patenterteilung: **14.07.1999**
(21) Anmeldenummer: 94916964.3
(22) Anmeldetag: 14.05.1994
(51) Int. Cl.: H04N 13/02, G02B 27/26

(54) **VERFAHREN ZUR ERZEUGUNG EINES STEREOSKOPISCHEN BILDES**
PROCESS FOR GENERATING A STEREOSCOPIC IMAGE
PROCEDE PERMETTANT DE PRODUIRE UNE IMAGE STEREOSCOPIQUE

(30) Priorität: 24.05.1993 DE 4317153; 26.07.1993 DE 4324880
(43) Veröffentlichungstag der Anmeldung: 13.03.1996
(73) Patentinhaber: DEUTSCHE THOMSON-BRANDT GMBH, 78048 Villingen-Schwenningen (DE)
(72) Erfinder: CHIKAZAWA, Yoshiharu, Kanagawa-ku Yokohama 221 (JP)
(86) Internationale Anmeldenummer: EP9401570
(87) Internationale Veröffentlichungsnummer: WO9428681

(56) Entgegenhaltungen:
- EP-A- 0 332 268
- EP-A- 0 354 851
- FR-A- 2 675 003
- US-A- 5 264 964
- PATENT ABSTRACTS OF JAPAN vol. 17, no. 351 (E-1392) 2. Juli 1993 & JP,A,05 049 044 (NIPPON TELE TELE) 26. Februar 1993
- PATENT ABSTRACTS OF JAPAN vol. 16, no. 260 (P-1369) 12. Juni 1992 & JP,A,04 063 336 (MATSUSHITA) 28. Februar 1992

## Beschreibung

Die Erfindung geht aus von einem Verfahren zur Erzeugung eines stereoskopischen Bildes gemäß dem Oberbegriff des Anspruchs 1.

Es ist bekannt, ein stereoskopisches Bild mit Hilfe von zwei Bildvorrichtungen, zwei Bildsignalprozessoren und eines speziellen Bildsignalprozessors zu erzeugen. Der spezielle Bildsignalprozessor erstellt aus zwei Kamerabildern ein pixelförmiges Bild für das rechte und linke Auge, so daß ein stereoskopischer Bildeffekt entsteht. Es werden jeweils 50 % der Pixel von den Kamerabildern genutzt. Der spezielle Bildsignalprozessor ist sehr komplex und schwierig zu entwerfen, da der Stromkreis jeweils für das Bild des rechten und linken Auges bei jedem Pixel eine Umschaltung vornehmen muß

Aus EP 0 332 268 A1 ist bekannt, ein Aufnahmesystem für stereoskopische Displays mit zwei orthogonal polarisierten Bildern.

Aus JP - A 05049044 ist bekannt, ein dreidimensionales Display mit einer Glasfaseranordnung zur Wiedergabe eines dreidimensionalen Bildes.

Aus EP 0 354 851 A2 ist bekannt, daß ein stereoskopisches Bild mit Hilfe einer linsenförmigen Anordnung dargestellt wird.

Aus FR - A 2 675 003 ist bekannt, den Strahlengang mittels Spiegel derart zu beeinflussen, daß die Aufnahme eines stereoskopischen Bildes ermöglicht wird.

Der Erfindung liegt die Aufgabe zugrunde, eine einfache und billige Anordnung zu schaffen, welche über eine pixelförmige Erfassung und/oder Darstellung ein stereoskopisches Bild visualisiert. Diese Aufgabe wird durch die in den Ansprüchen 1, 4, 7 und 8 angegebenen Merkmale der Erfindung gelöst. Vorteilhafte Weiterbildungen der Erfindung sind in den abhängigen Ansprüchen angegeben.

Die erfindungsgemäße Anordnung erfaßt über eine optische Einheit ein Objekt, und durch eine unterschiedliche Polarisation der Strahlen wird ein stereoskopisches Bild auf einer Bilderfassungsvorrichtung und/oder von einer Bilddarstellungsvorrichtung abgebildet. Die optische Einheit ist in zwei optische Einheiten zur Erfassung des Objektes geteilt bzw. unterteilt, wobei die eine optische Einheit den Bildbereich für das links Auge und die andere optische Einheit den Bildbereich für das rechte Auge erfaßt. Jede optische Einheit wird mit einer ersten Polarisationseinheit linear polarisiert. Diese Polarisation wird mit versetzten Winkeln durchgeführt, wobei dieser Winkel vorzugsweise 90° beträgt. Die polarisierten Strahlen der ersten Polarisationseinheit treffen auf eine zweite Polarisationseinheit und werden durch diese Polarisationseinheit der Bilderfassungsvorrichtung und/oder von der Bilddarstellungsvorrichtung zugeführt.

Das zu erfassende Objekt wird also mit zwei Optiken erfaßt, wobei durch die Polarisation der Strahlen jede Optik speziell für ein Auge die Erfassung ermöglicht. Die polarisierten Strahlen werden auf der Bilderfassungsvorrichtung und/oder von der Bilddarstellungsvorrichtungals als eine pixelweise polarisierte Matrix abgebildet, so daß ein stereoskopisches Bild entsteht.

Bei einer Weiterbildung der Erfindung wird das Objekt über zwei optische Einheiten erfaßt und die Strahlen über Formationseinheiten einer linsenförmigen Anordnung zugeführt. Diese linsenförmige Anordnung besteht aus mehreren nach oben gewölbten Linsen, die nebeneinander angeordnet sind, wobei die Anordnung als Ganzes eine ebene Unterseite aufweist. Diese linsenförmige Anordnung ist durch die Wölbung in der Lage, die Strahlen zu trennen und auf der Bilderfassung- bzw. Bilddarstellungsvorrichtung das erfaßte Objekt pixelförmig darzustellen, so daß ein stereoskopischen Bild entsteht. Die linsenförmige Anordnung kann vorzugsweise durch eine prismaförmige Anordnung ersetzt werden.

Die Erfindung hat den Vorteil, daß nur eine Bildvorrichtung verwendet wird. Es wird weiterhin nur ein Bildsignalprozessor benötigt. Ein spezieller Bildsignalprozessor zur Projektion des Bildes ist nicht notwendig. Desweiteren wird auch das Synchronsignal für die Kameras und den speziellen Bildsignalprozessor nicht mehr benötigt. Es werden 100 % der Pixel verwendet. Die Anordnung visualisiert ein pixelförmiges Bild, so daß ein stereoskopisches Bildes in einfacher und billiger Weise realisiert wird.

Die Erfindung wird im folgenden anhand der Zeichnungen erläutert. Darin zeigen:
- Fig. 1: das erfindungsgemäße Verfahren,
- Fig. 2: ein weiteres Ausführungsbeispiel des erfindungsgemäßen Verfahrens,
- Fig. 3: ein nächstes Ausführungsbeispiel des erfindungsgemäßen Verfahrens und
- Fig. 4-29: weitere Ausführungsbeispiele.

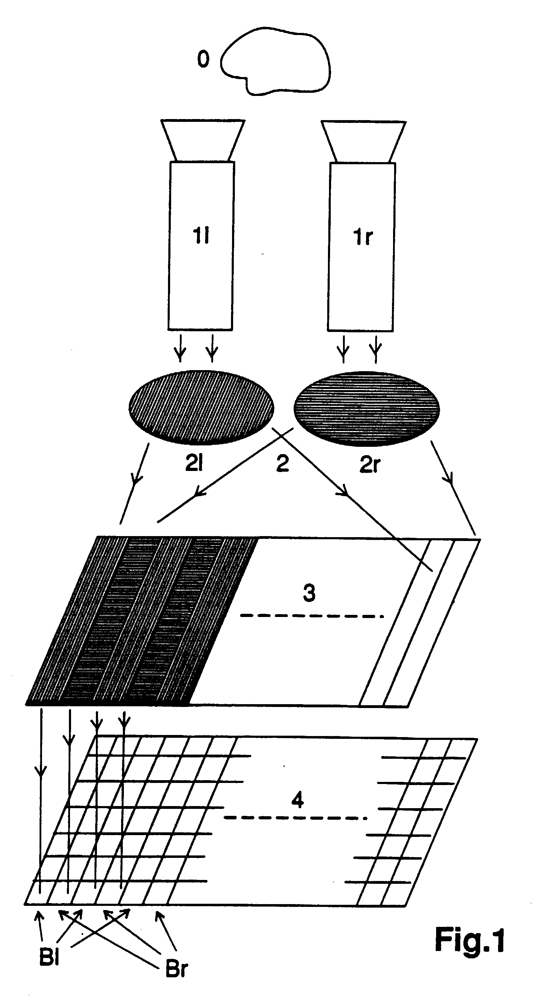

Fig. 1 stellt das erfindungsgemäße Verfahren dar. Ein Objekt O wird über zwei optische Einheiten 1l, 1r erfaßt. Die optischen Einheiten leiten den Strahlengang auf die jeweiligen ersten Polarisationseinheiten 2l, 2r. Die Polarisationseinheiten 2l, 2r leiten die vorzugsweise senkrecht zueinander polarisierten Strahlen weiter an eine zweite Polarisationseinheit 3. Von dort gelangen die Strahlen vorzugsweise senkrecht auf die Bilderfassung- bzw. Bilddarstellungsvorrichtung 4. Dort werden die pixelweise unterschiedlich polarisierten Strahlen für das linke und rechte Auge Bl, Br abgebildet und erzeugen ein stereoskopisches Bild auf der Bilderfassung- bzw. Bilddarstellungsvorrichtung 4. Die Bilderfassung- bzw. Bilddarstellungsvorrichtung 4 kann durch ein spezielles CCD bzw. LCD ausgebildet werden, so daß eine Weiterverarbeitung zur Übertragung oder Aufzeichnung möglich ist.

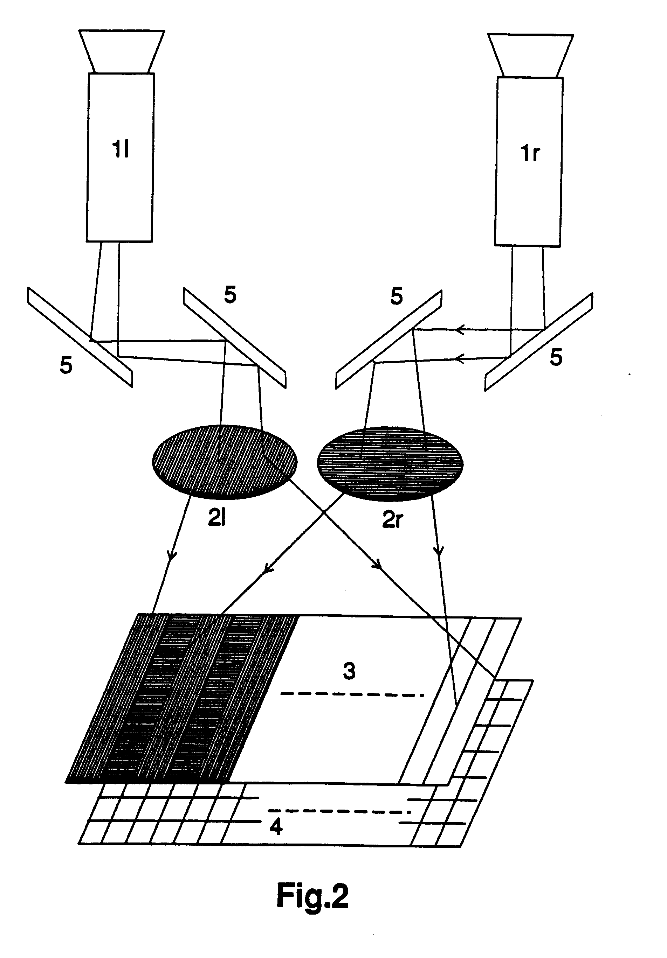

Fig. 2 zeigt ein weiters Ausführungsbeispiel der Erfindung. Die optischen Einheiten 1l, 1r erfassen ein Objekt O (hier nicht dargestellt) und leiten die Strahlen über Spiegel 5 auf die Polarisationseinheiten 2l, 2r. Von dort gelangen die Strahlen wiederum auf die Polarisationseinheit 3 und werden zur Bilderfassung- bzw. Bilddarstellungsvorrichtung 4 weitergegeben.

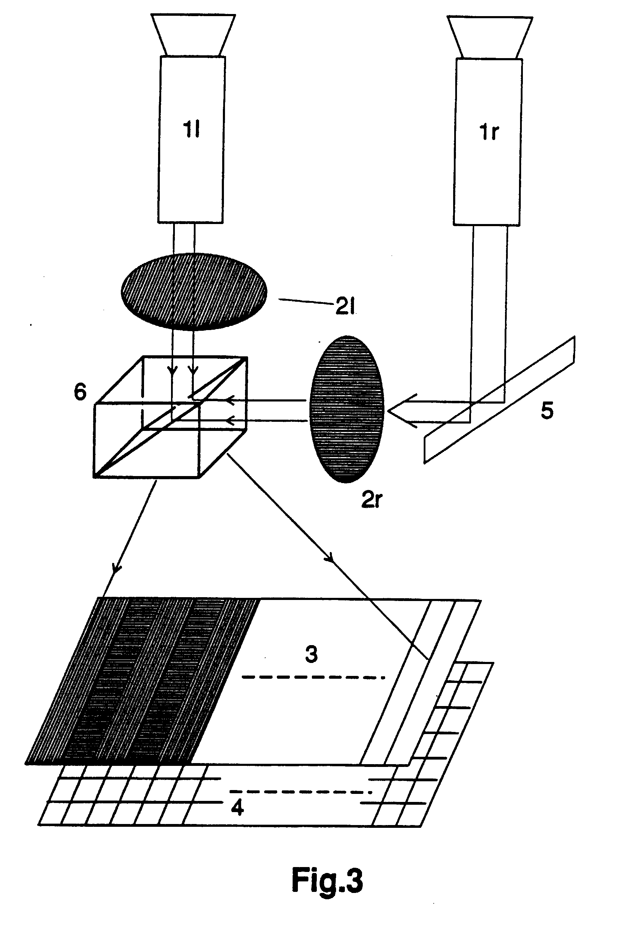

Fig. 3 stellt ein nächstes Ausführungsbeispiel der Erfindung dar. Die optischen Einheiten 1l, 1r erfassen ein Objekt (hier nicht dargestellt). Die optische Einheit 1l leitet den Strahlengang über die zugehörige Polarisationseinheit 2l auf den Strahlentrenner 6. Die optische Einheit 1r leitet den Strahlengang auf einen Spiegel 5, welcher die Strahlen auf die zugehörige optische Einheit 2r weitergibt. Von der optischen Einheit 2r gelangen die Strahlen auf den Strahltrenner 6. Der Strahltrenner 6 leitet die Strahlen der optischen Einheiten 1l, 1r auf die Polarisationseinheit 3, und von dort aus gelangen die Strahlen auf die Bilderfassung- bzw. Bilddarstellungsvorrichtung 4.

Die Bilddarstellungsvorrichtung und Bilderfassungsvorrichtung sind vorzugsweise für die dreidimensionale Darstellung bzw. Erfassung ausgelegt.

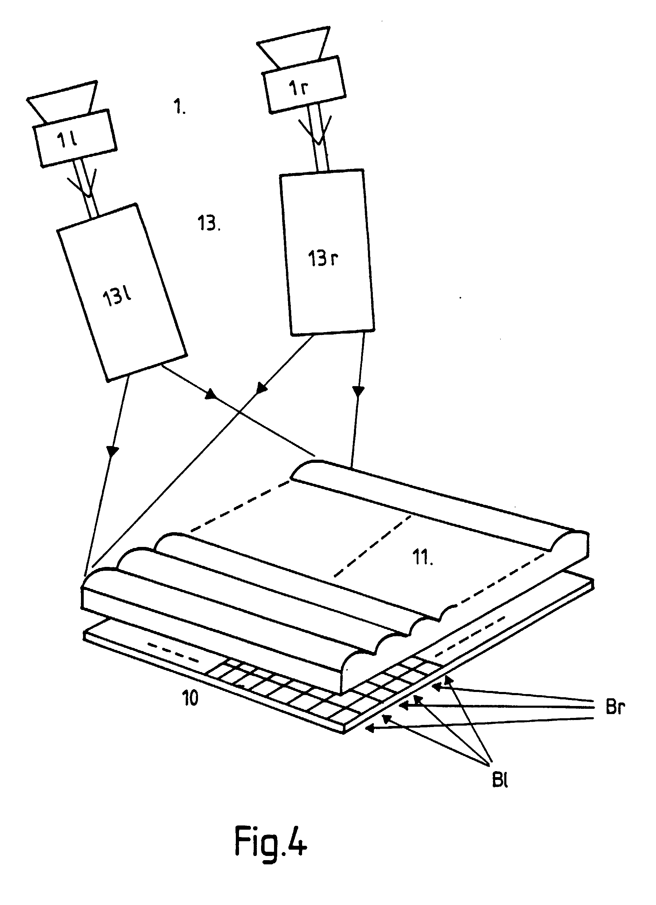

Fig. 4 stellt ein weiteres Ausführungsbeispiel der Erfindung dar. Die optischen Einheiten 1l, 1r leiten die Strahlen über Formationseinheiten 13l, 13r weiter zu einer linsenförmigen Anordnung 11. Die Formationseinheiten 13l, 13r sorgen dafür, daß jeweils die Strahlen für den linken Bildbereich und für den rechten Bildbereich auf die linsenförmige Anordnung treffen und von dort zur Bilderfassung- bzw. Bilddarstellungsvorrichtung 10 gelangen, welche wiederum pixelweise für das linke und rechte Auge Bl, Br ein stereoskopisches Bild abbildet.

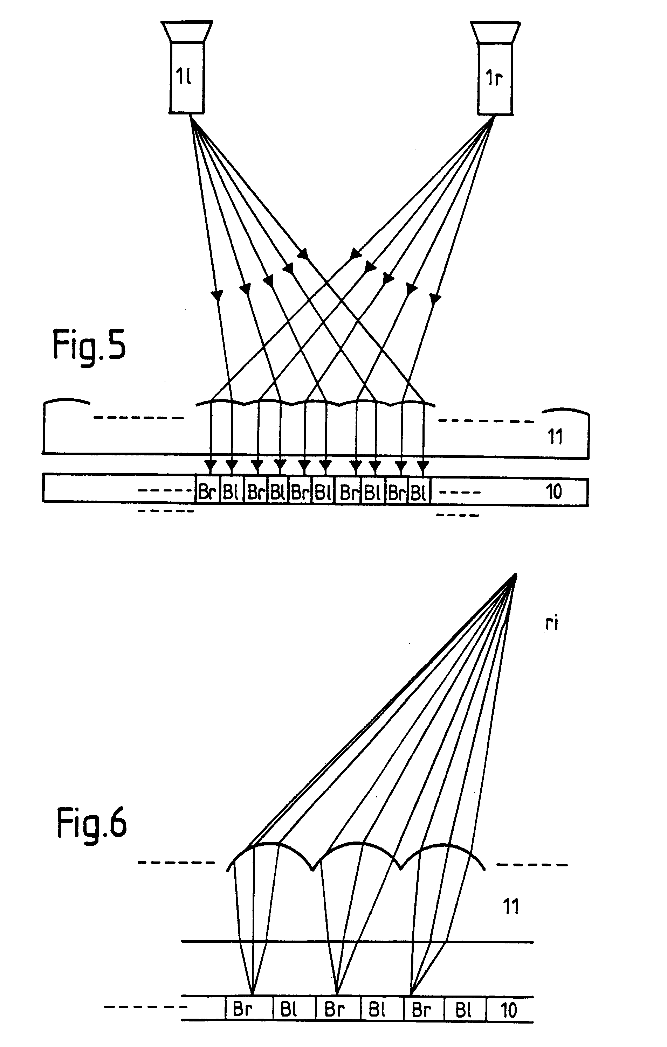

Fig. 5 zeigt die optischen Einheiten 1l, 1r, die linsenförmige Anordnung 11 und die Bilderfassung- bzw. Bilddarstellungsvorrichtung 10. Die optischen Einheiten 1l, 1r sind derart über der linsenförmigen Anordnung 11 angebracht, daß die austretenden Strahlen der optischen Einheit 1l, 1r auf die gewölbte Oberfläche der linsenförmigen Anordnung 11 gelangen und durch die Brechung der Strahlen jeweils eine pixelweise Zuordnung auf der Bilderfassung- bzw. Bilddarstellungsvorrichtung 10 für das linke und rechte Auge Bl, Br gewährleitet wird.

Fig. 6 ist eine vergrößerte Darstellung der über die rechte optische Einheit erfaßten Strahlen. Die Strahlen gelangen auf die linsenförmige Anordnung 11, und durch die Brechung der Strahlen in der linsenförmigen Anordnung 11 gelangen die Strahlen auf die vorgesehenen rechten Pixel Br der Bilderfassung- bzw. Bilddarstellungsvorrichtung 10.

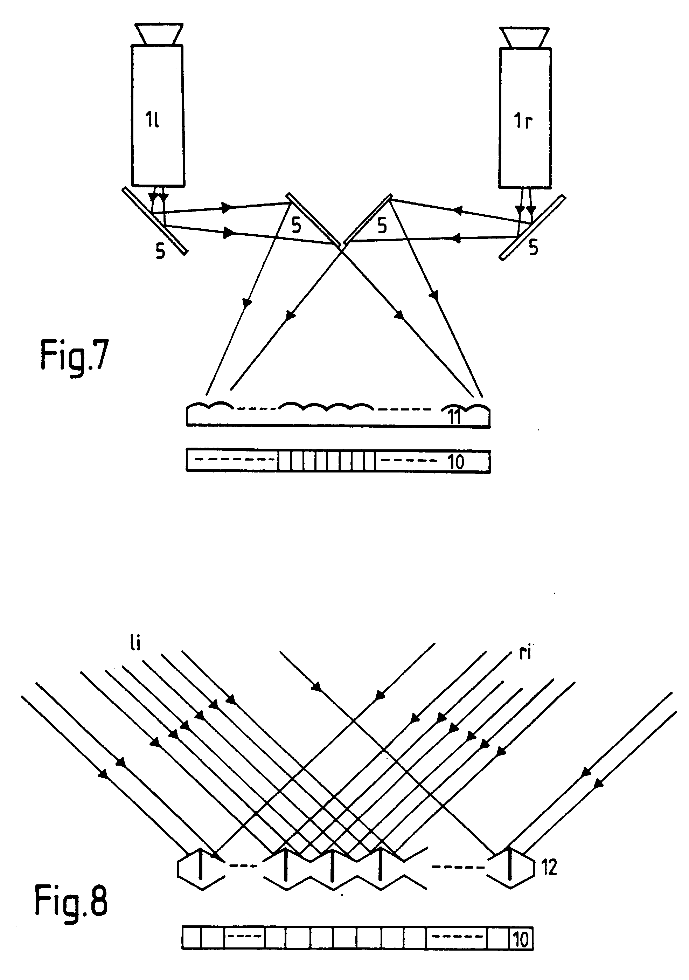

Fig. 7 zeigt, wie über die optischen Einheiten 1l, 1r die Strahlen über die Spiegel 5 und die linsenförmige Anordnung 11 zur Bilderfassung- bzw. Bilddarstellungsvorrichtung 10 gelangen.

Fig. 8 stellt statt der linsenförmigen Anordnung 11 eine prismaförmige Anordnung 12 dar. Die Strahlen der linken optischen Einheit li und der rechten optischen Einheit ri werden vor der prismaförmigen Anordnung 12 erfaßt und an die Bilderfassung-bzw. Bilddarstellungsvorrichtung 10 weitergegeben.

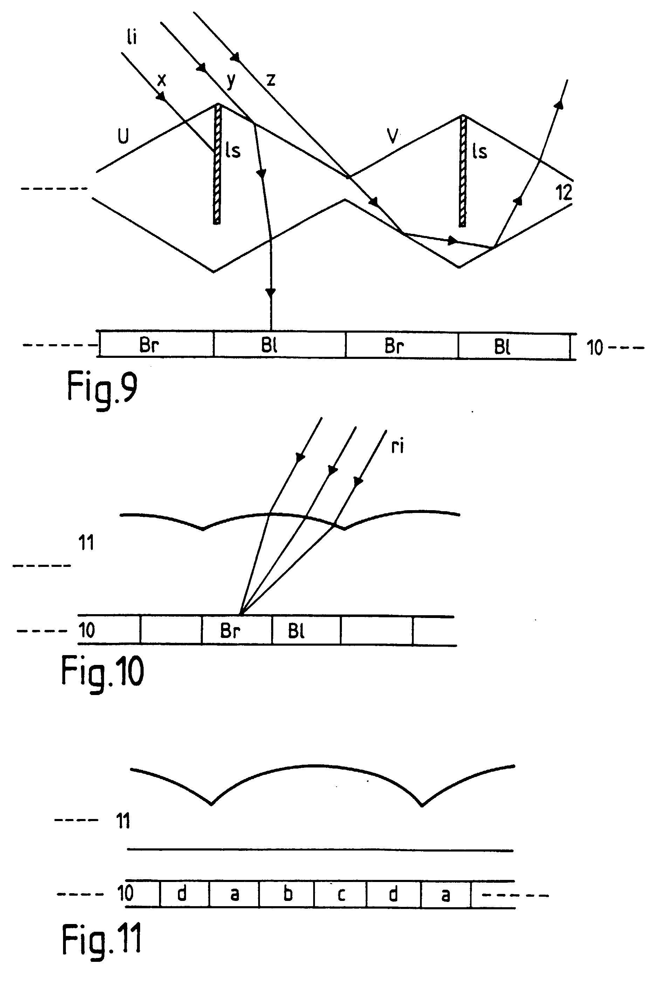

Fig. 9 ist eine vergrößerte Darstellung der prismaförmigen Anordnung. Es sind hier drei Strahlen li aufgeteilt in X, Y und Z. Der linke Strahl X trifft auf die Seite U des Prismas, und durch eine zu geringe Brechung des Strahls gelangt dieser zu einem sogenannten Linsenschild ls, so daß der Strahl nicht auf ein Pixelfeld gelangt, welches der rechten optischen Einheit vorbehalten ist. Der Strahl Y gelangt wie gewünscht durch die Brechung auf einen linken Pixelbereich Bl. Der Strahl Z tritt auf die Kante V der pixelförmigen Anordnung 12 auf und gelangt durch die unterschiedlichen Brechungen nicht mehr aus der prismaförmigen Anordnung 12 zur Bilderfassung- bzw. Bilddarstellungsvorrichtung 10.

Fig. 10 zeigt wiederum die linsenförmige Anordnung 11, welche mit der Bilderfassung- bzw. Bilddarstellungsvorrichtung 10 in direkter Verbindung steht. Die Strahlen ri der rechten optischen Einheit 1r, hier nicht dargestellt, gelangen durch Brechung auf einen rechten Pixelbereich der Bilderfassung- bzw. Bilddarstellungsvorrichtung 10.

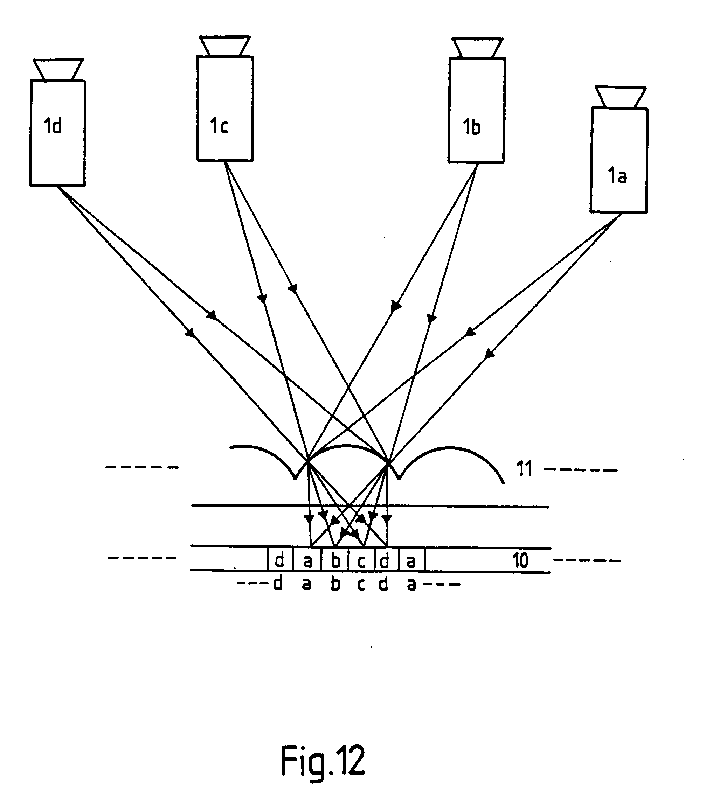

Fig. 11 zeigt die Unterteilung der Bilderfassung- bzw. Bilddarstellungsvorrichtung 10 für eine vierfache Pixeldarstellung. Die Aufteilung ist alternierend a, b, c, d. Der Strahlengang ist in Fig. 12 zu sehen. Die optischen Einheiten 1a, 1b, 1c und 1d erfassen das hier nicht dargestellte Objekt. Die Strahlen werden von den optischen Einheiten zur linsenförmigen Anordnung 11 geleitet. Durch Brechung der Strahlen gelangen sie zu dem jeweiligen Matrixfeld a, b, c, d der optischen Einheit.

Weitere Ausführungsbeispiele der Erfindung werden in den folgenden Zeichnungen dargestellt.

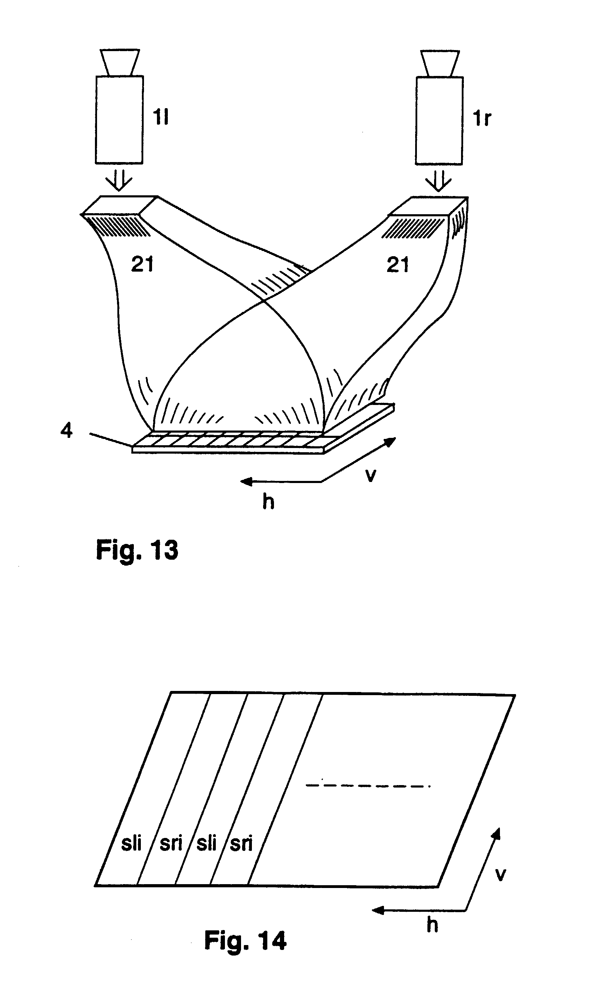

Fig. 13 zeigt eine linke optische Einheit 11, eine rechte optische Einheit 1r, ein Faserbündel 21, eine Bilderfassung-bzw. Bilddarstellungsvorrichtung 4, die horizontale Richtung h und die vertikale Richtung v. Mit der optischen Einheit 1l wird der Bildbereich für das linke Auge erfaßt. Mit der optischen Einheit 1r wird der Bildbereich für das rechte Auge erfaßt. Beide optischen Einheiten 1l, 1r leiten die Strahlen auf die jeweilige Ebene des Faserbündels 21. Die Fasern des Faserbündels 21 sind an der Seite zur Bilderfassung- bzw. Bilddarstellungsvorrichtung angeordneten Fläche derart angeordnet, daß sich gemäß Fig. 14 jeweils in horizontaler Richtung vertikale Streifenbildbereiche sli für das linke Auge und Streifenbildbereiche rli für das rechte Auge ergeben.

Fig. 14 zeigt die alternierende Darstellung der Streifenbildbereiche sli, rli für das linke und rechte Auge in horizontaler Richtung.

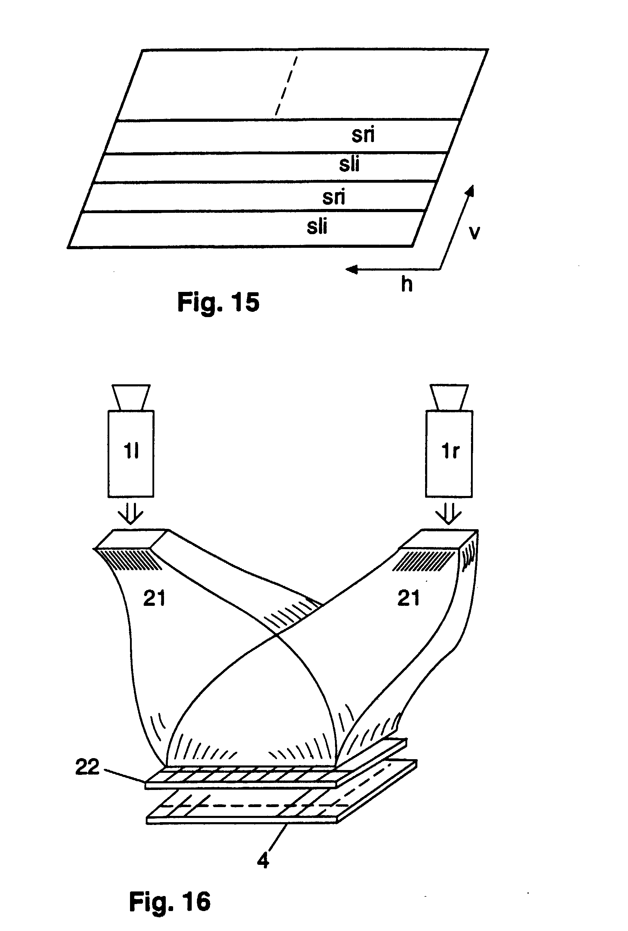

Fig. 15 zeigt die alternierenden Folgen der Streifenbildbereiche sli, rli für das linke und rechte Auge in vertikaler Richtung. Wenn die Anordnung für vertikale Richtung verwendet wird, ist es notwendig, einen Videosignalprozessor für das stereoskopische Display und eine linsenförmige Anordnung zu verwenden.

Fig. 16 zeigt die Faserbündeleinheit 21, die optischen Einheiten 1l, 1r, ein Farbfilter 22 und die Bilderfassung- bzw. Bilddarstellungsvorrichtung 4. Bei dieser Anordnung ist das Farbfilter 22 vorzugsweise vor der Bilderfassung- bzw. Bilddarstellungsvorrichtung 4 angeordnet, da auf diese Weise nur ein Farbfilter zu verwenden ist.

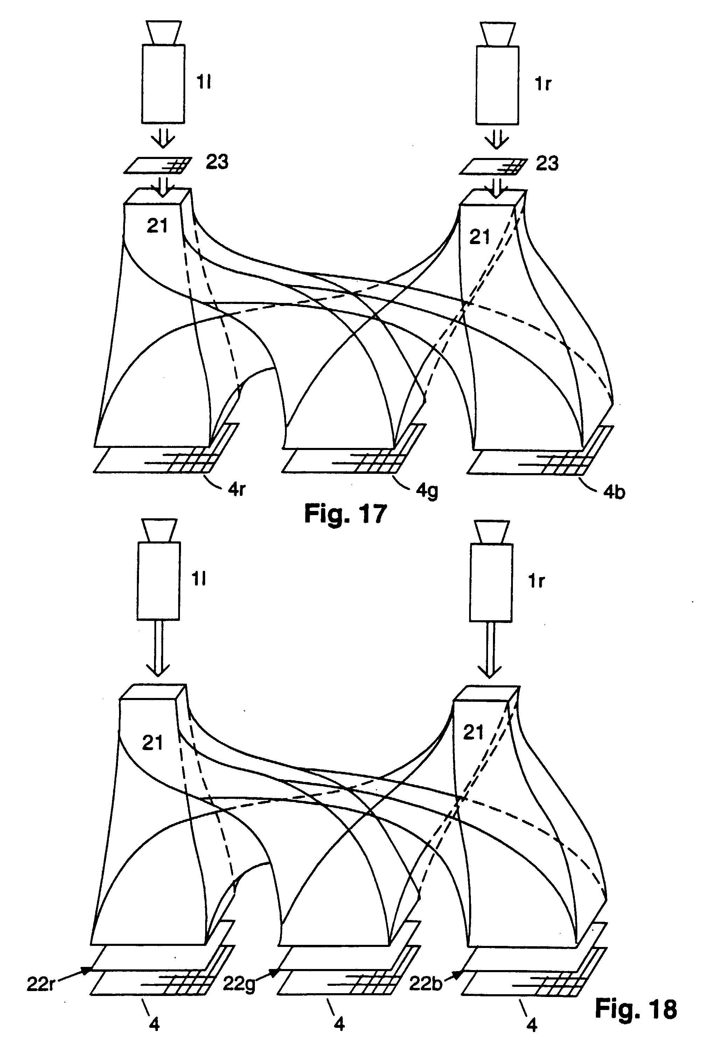

Fig. 17 zeigt die optischen Einheiten 1l, 1r, das Matrixfarbfilter 23, eine Faserbündeleinheit 21 und die Bilderfassung- bzw. Bilddarstellungsvorrichtung für rot, grün und blau 4r, 4g, 4b. Der Strahlengang verläuft jeweils durch die optischen Einheiten 1l, 1r, auf das jeweils zugeordnete Matrixfarbfilter 23, weiterhin auf die Faserbündel 21 und endet auf dem Bilderfassung- bzw. Bilddarstellungsvorrichtungen rot 4r, grün 4g und blau 4b.

Fig. 18 zeigt die optischen Einheiten 1l, 1r, die Faserbündeleinheit 21, die Farbfilter rot 22r, grün 22g, blau 22b und die Bilderfassung- bzw. Bilddarstellungsvorrichtung 4. Der Strahlengang verläuft über die optischen Einheiten 1l, 1r über die Faserbündeleinheit 21 durch das jeweilige Farbfilter rot 22r, grün 22g und blau 22b auf die Bilddarstellungsvorrichtungen 4.

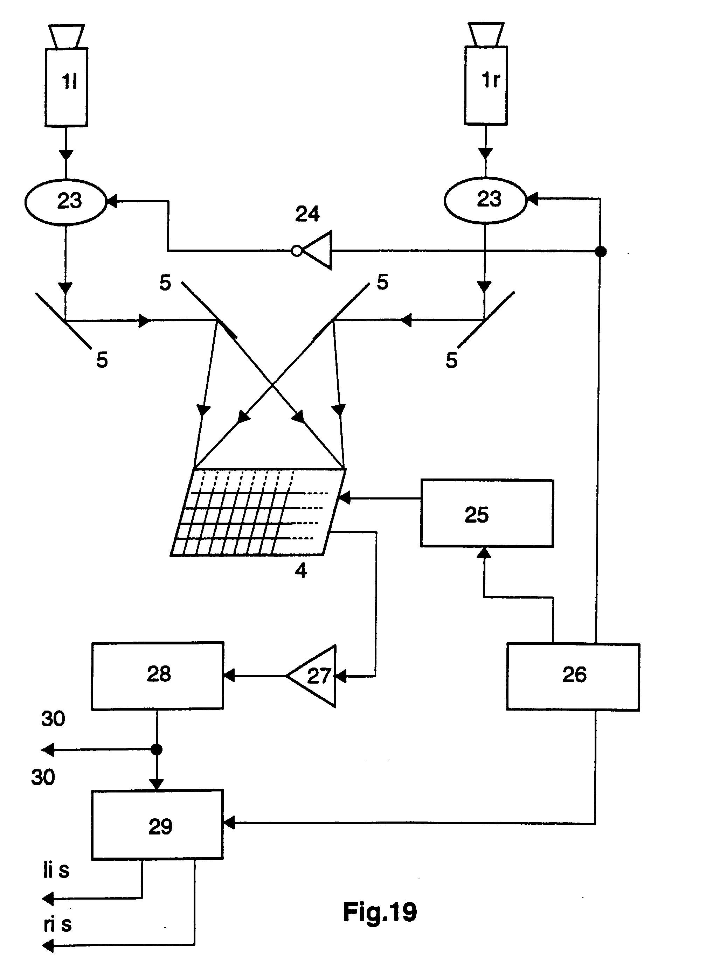

Fig. 19 zeigt die optischen Einheiten 1l, 1r, die Belichtungseinheiten 23, die Negationseinheit 24, die Spiegel 5, die Bilderfassung- bzw. Bilddarstellungsvorrichtung 4, die Bilddarstellungstreibereinheit 25, die Zeitsteuereinheit 26, den Verstärker 27, den Videosignalprozessor 28, den Bildschalter 29, das Zeiteinteilungssignal für ein stereoskopisches Bild 30 und die Signale für linkes und rechtes Bild lis, ris. Das Objekt, hier nicht dargestellt, wird durch die optischen Einheit 1l, 1r erfaßt. Die jeweiligen Strahlen werden über die Belichtungseinheit 23 und die Spiegel 5 auf die Bilderfassung- bzw. Bilddarstellungsvorrichtung 4 geleitet.

Die Belichtungseinheit 23 wird durch die Zeitsteuereinheit 26 angesteuert. Die Negationseinheit 24 dient dazu, daß jeweils nur die Strahlen der linken optischen Einheit 1l oder die der rechten optischen Einheit 1r durchgelassen werden. Die Belichtungseinheit 23 kann vorzugsweise mechanisch ausgebildet sein oder auch als Liquid Crystalbelichtungseinheit. Die Zeitsteuereinheit 26 steuert weiterhin die Bilderfassung- bzw. Bilddarstellungsvorrichtungstreibereinheit 25 an, sowie auch den Bildschalter 29. Die Ansteuerung wird derart durchgeführt, daß der Bilderfassung- bzw. Bilddarstellungsvorrichtung 4 jeweils mitgeteilt wird, ob die Strahlen der linken optischen Einheit 11 oder der rechten optischen Einheit lr auf sie auftreffen. Diese Information wird auch dem Bildschalter 29 mitgeteilt. Die Bilderfassung- bzw. Bilddarstellungsvorrichtung 4 gibt über den Verstärker 27 die Signale an den Videosignalprozessor 28 weiter. Am Videosignalprozessor 28 steht das Zeiteinteilungssignal für das stereoskopische Bild 30 an. Dieses Signal wird auch an den Bildschalter 29 weitergeleteitet, der jeweils das linke Bildsignal lis und das rechte Bildsignal ris durchschaltet.

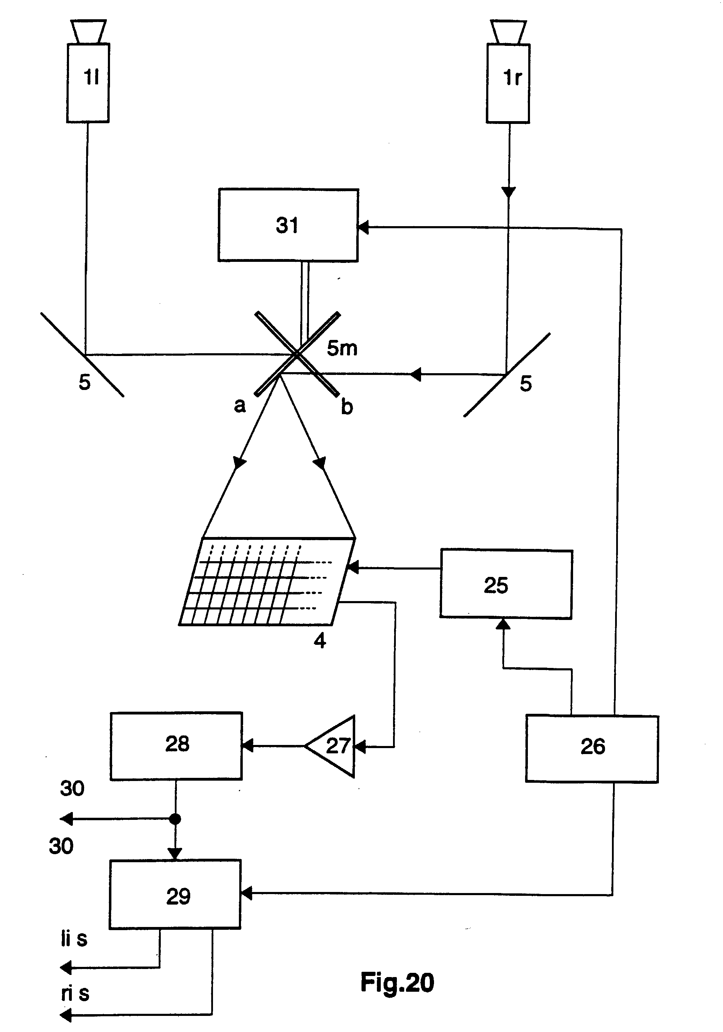

Fig. 20 hat im unteren Bereich den gleichen Aufbau wie Fig. 19. Der Unterschied zu Fig. 19 besteht darin, daß die Belichtungseinheiten 23, die Negationseinheit 24 sowie ein Spiegel 5 weggefallen sind. Technisch wird die Steuerung der Strahlen durch einen bewegbaren Spiegel 5m gelöst, der durch einen Controler 31 über die Zeitsteuereinheit 26 angesteuert wird. Die Zeitsteuereinheit 26 steuert also den Controler 31 derart an, daß sich der bewegbare Spiegel 5m jeweils für die Strahlen der optischen Einheit 1r in Stellung a befindet und für die Strahlen der optischen Einheit 11 in Stellung b befindet. Die Verarbeitung der Strahlen geschieht in gleicher Weise wie in Fig. 18 beschrieben.

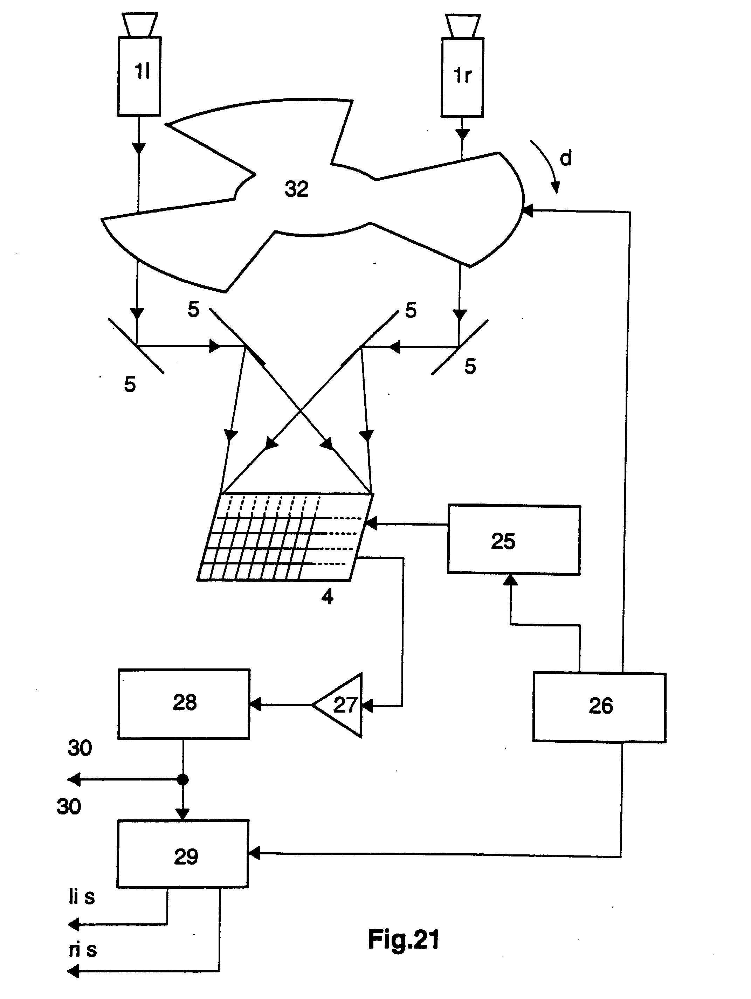

Fig. 21 zeigt einen ähnlichen Aufbau wie Fig. 19. Die Einheiten im unteren Bildbereich sind identisch mit der Fig. 19. Eine Änderung zu Fig. 19 besteht in der rotierenden Belichtungseinheit 32. Die Zeitsteuereinheit 26 steuert die rotierende Belichtungseinheit 32 derart an, daß jeweils die Strahlen der linken optischen Einheit 11 und der rechten optischen Einheit 1r nacheinander auf die Bilderfassung- bzw. Bilddarstellungsvorrichtung 4 gelangen. Die Verarbeitung mit der Zeitsteuereinheit 26 entspricht der unter Fig. 19 beschriebenen Funktion. Die Drehrichtung ist durch den Pfeil d dargestellt.

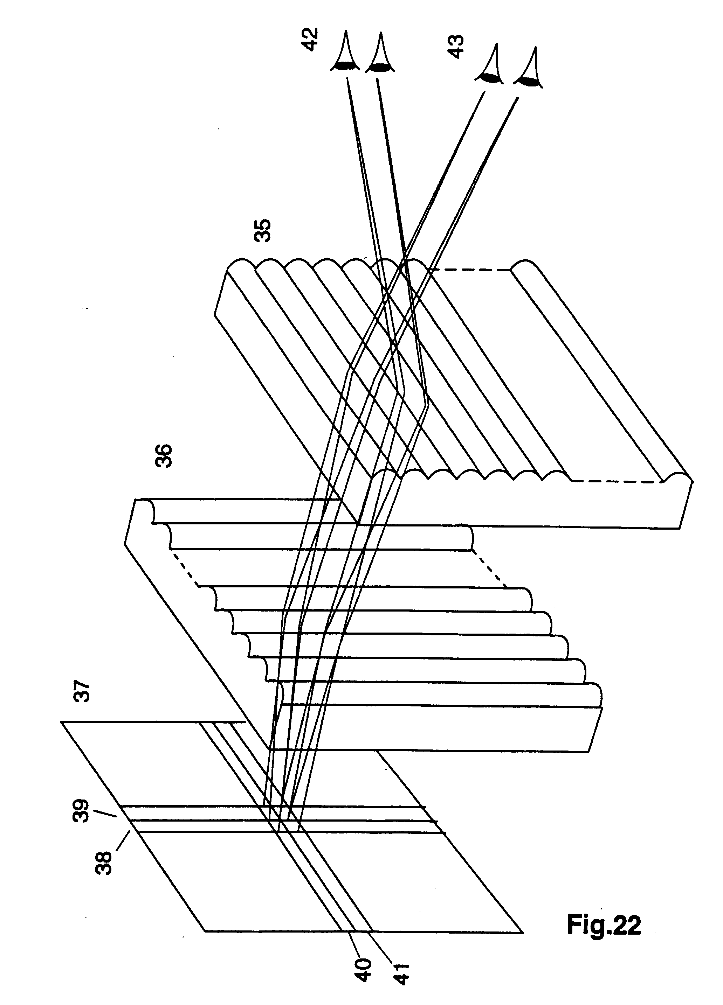

Fig. 22 zeigt eine linsenförmige Anordnung 35 in vertikaler Richtung, eine linsenförmige Anordnung 36 in horizontaler Richtung und eine modifizierte Bilderfassung- bzw. Bilddarstellungsvorrichtung 37. Bei einer derart ausgebildeten Anordnung ergibt sich für den Betrachter bei einer Bewegung in horizontaler Richtung als auch bei einer Bewegung in vertikaler Richtung der Augen ein stereoskopisches Bild. Unter 42 ist die Betrachtungsposition der Augen oberhalb dargestellt. Unter 43 ist die Betrachtungsposition der Augen unterhalb dargestellt. Auf der modifizierten Bilderfassung- bzw. Bilddarstellungsvorrichtung 37 ergibt sich durch die vertikal und horizontal angeordneten Linsenanordnungen jeweils ein Bild 38 für das rechte Auge, ein Bild 39 für das linke Auge 39, ein Bild 40 für die Position der unteren Betrachtung und ein Bild 41 für die Position der oberen Bildbetrachtung. Es auch möglich, die Anordnung 37 durch ein flate tandel Display auszubilden.

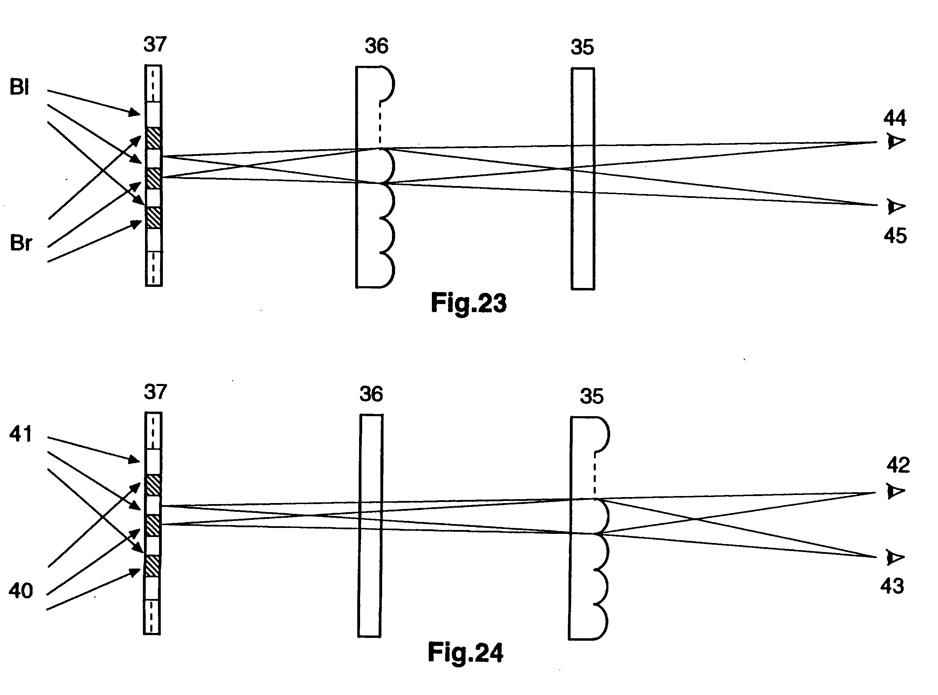

Fig. 23 zeigt die Draufsicht der unter Fig. 22 dargestellten Anordnung. Es ist aus dieser Ansicht weiterhin zu entnehmen, daß auf der modifizierten Bilderfassung- bzw. Bilddarstellungsvorrichtung 37 jeweils die Pixel Be für das linke Auge und die Pixel Br für das rechte dargestellt sind.

Fig. 24 stellt die Seitenansicht der unter Fig. 22 beschriebenen Anordnung dar. Dort ist ersichtlich, daß die modifizierte Bilderfassung- bzw. Bilddarstellungsvorrichtung 37 einen Bildbereich 41 der oberen Position der Bildbetrachtung und einen Bildbereich 40 für die untere Bildtrachtung aufweist. Durch eine derartige Anordnung von vertikal und horizontalen Linsenanordnungen ist es also möglich, die auf die modifizierte Bilderfassung- bzw. Bilddarstellungsvorrichtung 37 aufgeteilten Bilder stereoskopisch zu betrachten. Die Aufteilung auf der modifizierten Bilderfassung- bzw. Bilddarstellungsvorrichtung ist jeweils in horizontaler Richtung pixelförmig, für das rechte und linke Auge und in vertikaler Richtung der oberen und unteren Betrachtungsposition des Bildes angepaßt, so daß sich eine Art Matrix ergibt.

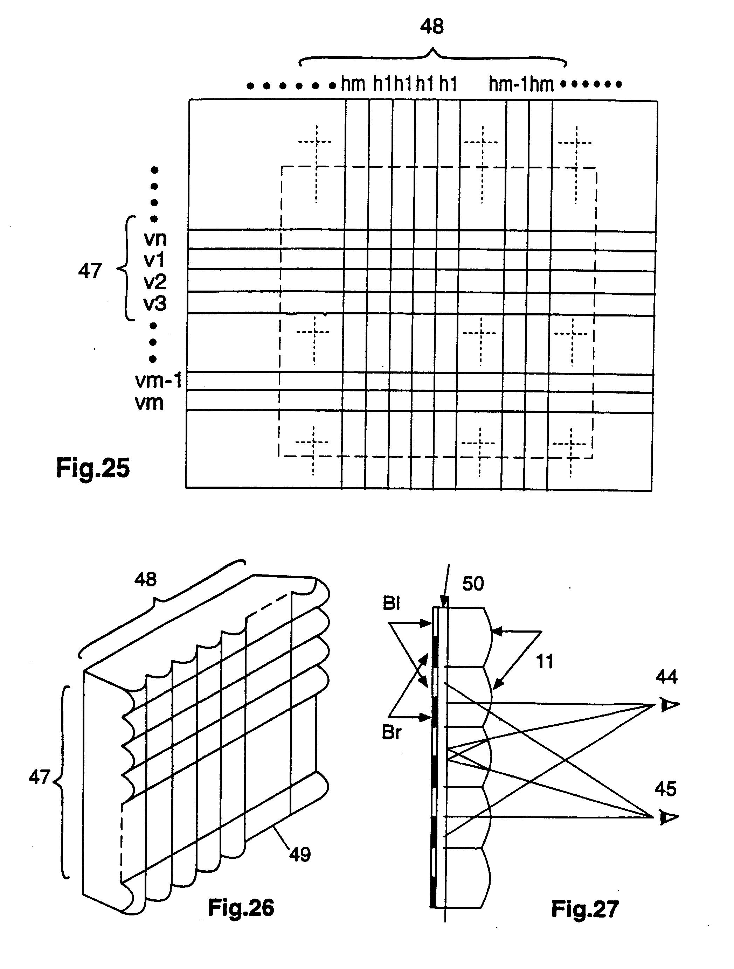

Fig. 25 stellt eine derartige Matrix dar. Aus den vertikalen unterschiedlichen Bildern 47 mit vertikalen Bildbereichen Vm, V1, V2... bis Vm-1, Vm und aus den verschiedenen horizontalen Bildern 48 mit horizontalen Bildbereichen hm, h1, h2... bis hm-1, hm.

Fig. 26 stellt eine Kombination aus der horizontalen und vertikalen Anordnung der Linsen dar. Es werden also die unterschiedlichen vertikalen Bildbereiche 47 und unterschiedlichen horizontalen Bildbereiche 48 mit einer modifizierten linsenförmigen Anordnung 49 erfaßt.

Fig. 27 zeigt eine linsenförmige Anordnung 11, das rechte Auge 44, das linke Auge 45, Pixel B1 für das linke Auge, Pixel Br für das rechte Auge und ein Frontglas für das Display 50. Durch Betrachten des Bildes durch eine linsenförmige Anordnung 11 und die Darstellung des Bildes in Pixelform ist ein stereoskopisches Bild mit den Augen wahrnehmbar.

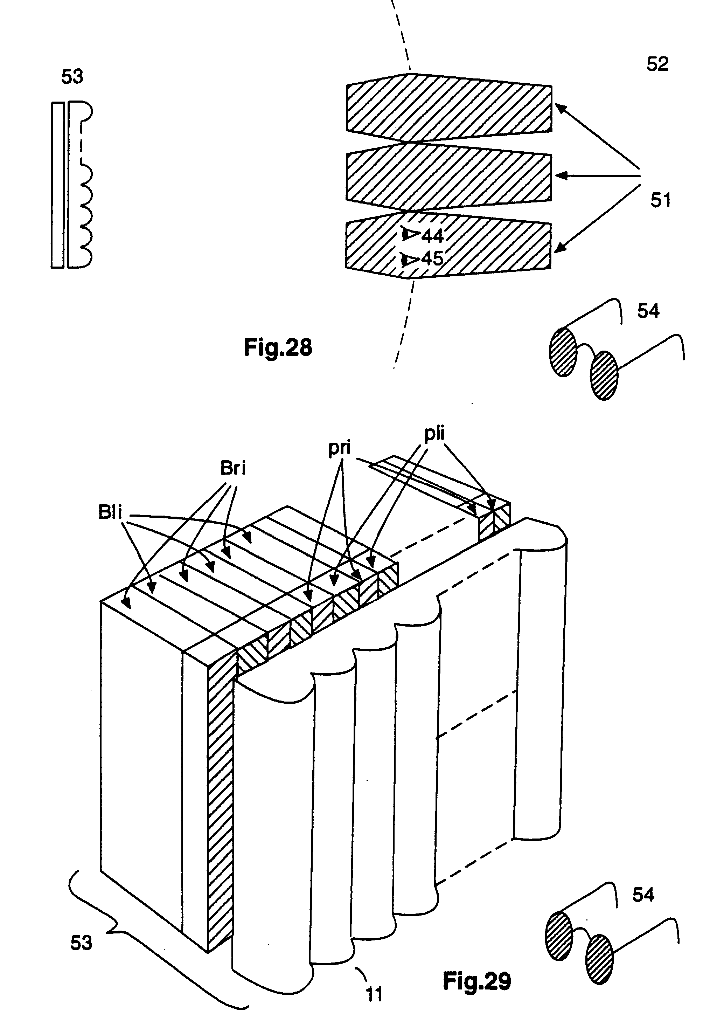

Fig. 28 zeigt ein stereoskopisches Display 53, einen stereoskopischen Bildbereich 51 ohne Brille, einen stereoskopischen Bildbereich 52 mit Brille, eine polarisierte Brille 54, ein rechtes Auge 44 und ein linkes Auge 45. Befindet sich der Betrachter im stereoskopischen Bildbereich 51, nimmt er auch ohne die spezielle polarisierte Brille 54 ein stereoskopisches Bild wahr. Verläßt der Betrachter den Bereich, ist ein stereoskopisches Bild nur mit der polarisierten Brille 54 wahrnehmbar. Damit mit einer polarisierten Brille ein stereoskopisches Bild wahrnehmbar ist, ist das stereoskopische Display 53 wie in Fig. 29 gezeigt ausgebildet.

Fig. 29 zeigt die polarisierte Brille 54, eine linsenförmige Anordnung 11, Pixel Bli für das linke Bild, Pixel Bri für das rechte Bild, eine Polarisationsanordnung pri für das rechte Bild und eine Polarisationsanordnung pli für linke Bild. Durch eine derart ausgebildete Anordnung ist es möglich, mit einer polarisierten Brille auf unterschiedliche Entfernungen den Eindruck eines stereoskopischen Bildes zu erlangen. Die Art der Polarisation der Brille und der Polarisationsanordnungen auf dem stereoskopischen Display 53 kann sowohl linear polarisiert als auch zirkular polarisiert sein.

## Patentansprüche

1. Vorrichtung zur Aufnahme eines stereoskopischen Bildes mit
- einer optischen Einheit (1) zur optischen Erfassung eines ersten Bildes (links) und eines zweiten Bildes (rechts) eines Objektes (O);
- Teilungsmittel (2, 3; 11; 12; 21), die Lichtsignale der optischen Einheit (1) empfangen, aufteilen in Lichtsignale gemäß des ersten Bildes und gemäß des zweiten Bildes und an eine Bilderfassungsvorrichtung (4; 37) weiterleiten, die die geteilten Signale empfängt und weiterverarbeitet,
dadurch gekennzeichnet, daß
die Teilungsmittel als Polarisatoren (2,3), als linsenförmige Anordnung (11), als prismenförmige Anordnung (12) oder als Faserbündel (21) ausgebildet sind und derart angeordnet sind, daß die Lichtsignale gemäß des ersten Bildes und die Lichtsignale gemäß des zweiten Bildes von den Teilungsmitteln (2, 3; 11; 12; 21) gleichzeitig an die Bilderfassungsvorrichtung (4; 10) geleitet werden.

2. Vorrichtung nach Anspruch 1, dadurch gekennzeichnet, daß die Teilungsmittel als Faserbündel (21) ausgebildet sind und derart angeordnet sind, daß die Lichtsignale gemäß des ersten Bildes und die Lichtsignale gemäß des zweiten Bildes streifenförmig in horizontaler Richtung oder in vertikaler Richtung an die Bilderfassungsvorrichtung (4; 10) geleitet werden.

3. Vorrichtung nach Anspruch 1 oder 2, dadurch gekennzeichnet, daß die Teilungsmittel als Faserbündel (21) ausgebildet sind und daß Farbfilter (23; 22) vor bzw. hinter den Faserbündeln (21) angeordnet sind.

4. Vorrichtung nach Anspruch 1, dadurch gekennzeichnet, daß die Teilungsmittel eine linsenförmige Anordnung (36) in vertikaler Richtung und eine linsenförmige Anordnung (35) in horizontaler Richtung enthalten, die derart angeordnet sind, daß zusätzlich zu dem ersten Bild und zu dem zweiten Bild des Objektes (O) weitere Bilder durch die Bilderfassungsvorrichtung (37) aufgenommen werden.

5. Vorrichtung zur Aufnahme eines stereoskopischen Bildes mit
- einer optischen Einheit (1) zur optischen Erfassung eines ersten Bildes (links) und eines zweiten Bildes (rechts) eines aufzuzeichnenden Objektes (O);
- Teilungsmitteln (2, 3; 11; 12; 21), die Lichtsignale der optischen Einheit (1) empfangen, aufteilen in Lichtsignale gemäß des ersten Bildes und gemäß des zweiten Bildes und an eine Bilderfassungsvorrichtung (4) weiterleiten, die die geteilten Signale empfängt und weiterverarbeitet,
- Separationsmitteln (23; 5m; 32), die entweder die Lichtsignale des ersten Bildes oder des zweiten Bildes an die Bilderfassungsvorrichtung (4; 10) weiterleiten,
dadurch gekennzeichnet, daß die Separationsmittel Licht-Durchlaß-Mittel (23; 5m; 32) enthalten, die von einem gemeinsamen Signal einer Zeitsteuereinheit (26) angesteuert werden.

6. Vorrichtung nach Anspruch 5, dadurch gekennzeichnet, daß zwischen der Zeitsteuereinheit (26) und einem der Separationsmittel (23) eine Negationseinheit (24) zwischengeschaltet ist.

7. Vorrichtung zur Wiedergabe eines stereoskopischen Bildes mit
- einer Bilddarstellungsvorrichtung (4; 37), die pixelförmig mehrere Bilder eines Objektes (O) aus verschiedenen Perspektiven darstellt;
- Separationsmitteln, die Bildinformationen der dargestellten Bilder zu verschiedenen Positionen leiten,
dadurch gekennzeichnet, daß die Separationsmittel eine linsenförmige Anordnung (36) in vertikaler Richtung und eine linsenförmige Anordnung (35) in horizontaler Richtung enthalten.

8. Vorrichtung zur Wiedergabe eines stereoskopischen Bildes mit
- einer Bilddarstellungsvorrichtung (4; 37), die pixelförmig mehrere Bilder eines Objektes (O) aus verschiedenen Perspektiven darstellt;
- Separationsmitteln, die Bildinformationen der dargestellten Bilder zu verschiedenen Positionen leiten, **dadurch gekennzeichnet**, daß die Separationsmittel eine Polarisationsanordnung (pri,pli) und eine linsenförmige Anordnung (11) enthält, wobei die Polarisationsanordnung (pri, pli) hinter der linsenförmigen Anordnung (11) angeordnet ist, so daß in einem vorgegebenem Bereich ein stereoskopisches Bild ohne eine polarisierte Brille (54) wahrnehmbar ist und daß außerhalb dieses Bereiches ein stereoskopisches Bild durch eine polarisierte Brille (54) wahrnehmbar ist.

## Claims

1. Device for pick-up of a stereoscopic image including:
- an optical unit (1) for the optical registration of a first image (left) and of a second image (right) of an object (0);
- dividing means (2, 3; 11; 12; 21) which receive light signals from the optical unit (1), divide them into light signals according to the first image and according to the second image and pass them on to an image pick-up device (4; 37) which receives the divided signals and further processes them,
characterized in that
the dividing means are constructed as polarizers (2, 3), as a lenticular arrangement (11), as a prism-like arrangement (12) or as a fibre bundle (21) and are arranged in such a manner that the light signals according to the first image and the light signals according to the second image are simultaneously led by the dividing means (2, 3; 11; 12; 21) to the image pick-up device (4; 10).

2. Device according to claim 1, characterized in that the dividing means are constructed as fibre bundles (21) and are arranged in such a manner that the light signals according to the first image and the light signals according to the second image are led in a strip-like manner in the horizontal direction or in the vertical direction to the image pick-up device (4; 10).

3. Device according to claim 1 or 2, characterized in that the dividing means are constructed as fibre bundles (21) and in that colour filters (23; 22) are arranged in front of or behind the fibre bundles (21).

4. Device according to claim 1, characterized in that the dividing means contain a lenticular arrangement (36) in the vertical direction and a lenticular arrangement (35) in the horizontal direction, which are arranged in such a manner that, in addition to the first image and to the second image of the object (0), further images are picked-up by means of the image pick-up device (37).

5. Device for pick-up of a stereoscopic image including:
- an optical unit (1) for the optical registration of a first image (left) and of a second image (right) of an object (0) to be picked-up;
- dividing means (2, 3; 11; 12; 21) which receive light signals from the optical unit (1), divide them into light signals according to the first image and according to the second image and pass them onto an image pick-up device (4) which receives the divided signals and further processes them,
- separation means (23; 5m; 32) which pass on either the light signals from the first image or from the second image to the image pick-up device (4; 10), characterized in that the separation means contain light transmission means (23; 5m; 32) which are driven by a common signal of a timing control unit (26).

6. Device according to claim 5, characterized in that a negation unit (24) is interposed between the timing control unit (26) and one of the separation means (23).

7. Device for reproducing a stereoscopic image including:
- an image display device (4; 37) which displays a plurality of images of an object (0) pixel by pixel from various perspectives;
- separation means which lead items of image information of the pictures displayed to various positions,
characterized in that the separation means contain a lenticular arrangement (36) in the vertical direction and a lens-like arrangement (35) in the horizontal direction.

8. Device for reproducing a stereoscopic image including:
- an image display device (4; 37) which displays a plurality of images of an object (0) pixel by pixel from various perspectives;
- separation means which lead items of image information of the pictures displayed to various positions,
characterized in that the separation means contain a polarization arrangement (pri, pli) and a lenticular arrangement (11) wherein the polarization arrangement (pri, pli) is arranged behind the lenticular arrangement (11) in such a way that, in a predetermined region, a stereoscopic image can be perceived without polarized spectacles (54), and in that, outside this region, a stereoscopic image can be perceived by means of polarized spectacles (54).

## Revendications

1. Dispositif d'enregistrement d'une image stéréoscopique avec :
- une unité optique (1) pour l'enregistrement optique d'une première image (gauche) et d'une deuxième image (droite) d'un objet (O),
- des moyens de division (2, 3, 11, 12, 21) qui reçoivent les signaux lumineux de l'unité optique (1), les partagent en signaux lumineux selon la première image et la deuxième image et les transmettent à un dispositif d'enregistrement vidéo (4, 37) qui reçoit et traite les signaux partagés,
**caractérisé en ce que**
les moyens de division sont des unités de polarisation (2, 3), un dispositif lenticulaire (11), un dispositif prismatique (12), ou un faisceau de fibres optiques (21) et sont configurés de telle sorte que les signaux lumineux de la première image et les signaux lumineux de la deuxième image sont simultanément dirigés depuis les moyens de division (2, 3, 11, 12, 21) vers le dispositif d'enregistrement vidéo (4, 10).

2. Dispositif conforme à la revendication 1, **caractérisé en ce que** les moyens de division sont un faisceau de fibres optiques (21) et sont configurés de telle sorte que les signaux lumineux de la première image et les signaux lumineux de la deuxième image sont dirigés sous forme de bandes en sens vertical ou horizontal vers le dispositif d'enregistrement vidéo (4, 10).

3. Dispositif conforme à la revendication 1 ou 2, **caractérisé en ce que** les moyens de division sont un faisceau de fibres optiques (21) et le filtre couleur (23, 22) est situé avant ou après le faisceau de fibres optiques (21).

4. Dispositif conforme à la revendication 1, **caractérisé en ce que** les moyens de division comportent un dispositif lenticulaire (36) dans le sens vertical et un dispositif lenticulaire (35) dans le sens horizontal, configurés de telle sorte que d'autres images sont enregistrées par le dispositif d'enregistrement vidéo (37) en plus de la première image et de la deuxième image de l'objet (O).

5. Dispositif d'enregistrement d'une image stéréoscopique avec :
- une unité optique (1) pour l'enregistrement optique d'une première image (gauche) et d'une deuxième image (droite) d'un objet (O) à enregistrer,
- des moyens de division (2, 3, 11, 12, 21) qui reçoivent les signaux lumineux de l'unité optique (1), les partagent en signaux lumineux selon la première image et la deuxième image et les transmettent à un dispositif d'enregistrement vidéo (4,) qui reçoit et traite les signaux partagés,
- des moyens de séparation (23, 5m, 32) qui transmettent soit les signaux lumineux de la première image, soit les signaux lumineux de la deuxième image à un dispositif d'enregistrement vidéo (4, 10)
**caractérisé en ce que**
les moyens de séparation comportent des moyens transparents (23, 5m, 32) qui sont commandés par un signal commun de l'unité de contrôle temporel (26).

6. Dispositif conforme à la revendication 5, **caractérisé en ce qu'**une unité de négation (24) est intercalée entre l'unité de contrôle temporel (26) et l'un des moyens de séparation (23).

7. Dispositif d'affichage d'une image stéréoscopique avec :
- un dispositif d'affichage vidéo (4, 37) qui représente sous forme de pixels plusieurs images d'un objet (O) selon différentes perspectives,
- des moyens de séparation qui transmettent les informations vidéo des images représentées à différentes positions
**caractérisé en ce que**
les moyens de séparation comportent un dispositif lenticulaire (36) dans le sens vertical et un dispositif lenticulaire (35) dans le sens horizontal.

8. Dispositif d'affichage d'une image stéréoscopique avec :
- un dispositif d'affichage vidéo (4, 37) qui représente sous forme de pixels plusieurs images d'un objet (O) selon différentes perspectives,
- des moyens de séparation qui transmettent les informations vidéo des images représentées à différentes positions
caractérisé en ce que
les moyens de séparation comportent un dispositif de polarisation (pri, pli) et un dispositif lenticulaire (11), où le dispositif de polarisation (pri, pli) est placé après le dispositif lenticulaire (11), de sorte que, dans un domaine donné, une image stéréoscopique est visible sans lunettes polarisées (54) et qu'en dehors de ce domaine, une image stéréoscopique est visible à l'aide de lunettes polarisées (54).
